# FASCICULE DE BREVET EUROPEEN

(11) **EP 4 431 404 B1**
(45) Date de publication et mention de la délivrance du brevet: **06.05.2026**
(21) Numéro de dépôt: 24162451.9
(22) Date de dépôt: 08.03.2024
(51) Int. Cl.: B64F 5/40, B64F 5/50

(54) **SUPPORT AMELIORÉ POUR LA MAINTENANCE D'UN RADÔME D'AERONEF**
VERBESSERTE HALTERUNG ZUR WARTUNG EINES RADOMS EINES LUFTFAHRZEUGS
IMPROVED SUPPORT FOR AIRCRAFT RADOME MAINTENANCE

(30) Priorité: 14.03.2023 FR 2302342
(43) Date de publication de la demande: 18.09.2024
(73) Titulaire: Airbus Operations (S.A.S.), 31060 Toulouse Cedex 9 (FR)
(72) Inventeur: FOURNIE, Jacques, 31060 Toulouse (FR); POTEAU, Julien, 31060 Toulouse (FR); PERNALON, Noël, 31060 Toulouse (FR)
(74) Mandataire: Cabinet Le Guen Maillet

(56) Documents cités:
- CN-A- 104 858 685
- CN-A- 112 091 248
- CN-A- 112 680 865
- CN-U- 215 177 389
- CN-U- 216 030 375

## Description

### DOMAINE TECHNIQUE

La présente invention concerne un outil destiné à la réparation d'un radôme d'aéronef. L'invention concerne notamment un outil permettant le changement d'un élément de fixation d'un radôme d'aéronef et son positionnement sur ce radôme en respectant des tolérances d'interchangeabilité.

### ÉTAT DE LA TECHNIQUE ANTÉRIEURE

De nombreux aéronefs, dont des avions de transport civil et militaire, comportent un radôme installé à l'avant du fuselage et formant un dôme ou une pointe. La fonction d'un tel radôme est de protéger un dispositif de type radar positionné à l'avant de l'aéronef, tout en offrant à l'aéronef de bonnes performances aérodynamiques. Du fait de la présence d'un radar sous le radôme, ce dernier doit être réalisé dans un matériau perméable aux ondes électromagnétiques, par exemple un matériau composite électriquement isolant.

Les radômes d'aéronefs existants sont généralement des constructions dites « sandwich » qui consistent à fabriquer un ensemble rigide présentant au moins une coque, encore appelée âme, agencée entre deux peaux, ce qui permet d'augmenter significativement la rigidité de flexion tout en offrant une bonne transparence aux ondes électromagnétiques, notamment par ajustement de l'épaisseur du radôme à la longueur d'onde du radar couvert. Le rôle d'une âme est d'offrir un support aux peaux assemblées entre elles afin que l'ensemble puisse reprendre les efforts de flexion, l'âme présentant elle-même des caractéristiques de résistance au cisaillement. La forme des radômes, présentant une double courbure prononcée, implique un assemblage manuel et la taille des pétales qui le composent est limitée par la déformabilité des plans de tissu utilisé au regard de la forme du support présentant cette double courbure.

Ainsi, le radôme est une pièce fragile qui peut être endommagée rapidement en cas de choc en vol ou lors d'un roulage au sol de l'aéronef. La reprise des efforts en présence lors d'un choc, tel que par exemple une collision aviaire, est telle qu'un ou plusieurs éléments de fixation du radôme constituant des points d'interface précis avec l'avant du fuselage de l'aéronef doivent être remplacés, en plus des éventuelles réparations à réaliser sur la coque elle-même du radôme. Ces opérations de maintenance requièrent l'utilisation d'un support spécifique, appelé parfois « coquetier » et qui permet d'y insérer un radôme dans une position selon laquelle la pointe du radôme est orientée vers le bas.

Si un tel équipement est configuré pour faciliter les opérations de maintenance avec un degré de précision élevé, ce qui permet la reconstruction des points d'interfaces avec le fuselage de l'avion, il est généralement disponible dans un atelier de fabrication de radôme d'un avionneur, ce qui oblige alors à y transporter les radômes endommagés pour les y réparer. De tels transports présentent l'inconvénient d'entraîner à la fois des coûts de transport élevés et des délais d'immobilisation conséquents, ce qui est préjudiciable à l'exploitation de l'aéronef.

Le document brevet CN 216030375 U traite d'un support de radôme apte à faciliter une intervention sur un radôme. La situation peut être améliorée.

### EXPOSÉ DE L'INVENTION

Un objet de la présente invention est de proposer un support léger et pliable ou démontable, configuré pour la maintenance d'un radôme d'aéronef, et qui puisse être facilement transporté pour être installé sur un site de maintenance distant où se trouvent un ou plusieurs radômes à réparer.

A cet effet, il est proposé un support pour la maintenance d'un radôme d'aéronef comprenant un élément annulaire présentant une surface plane et à partir duquel s'étendent au moins trois pieds préférentiellement réglables, le support comprenant une pluralité d'éléments de maintien articulés et amovibles et comprenant chacun une surface d'appui sur une portion de surface intérieure ou extérieure d'un radôme d'aéronef lorsque le radôme est posé sur ladite surface plane de l'élément annulaire, le support étant agencé tel que l'un au moins des éléments de maintien articulés comprend un gabarit de perçage ou un gabarit de découpe, ou est configuré pour supporter un tel gabarit.

Ainsi, il est possible d'opérer aisément des opérations de positionnement, de perçage, de découpe ou plus généralement de maintenance sur la partie arrière (l'arête) d'un radôme d'aéronef, y compris en accédant aisément à l'intérieur du radôme, et opérer notamment des opérations de maintenance facilitées sur les éléments de fixation du radôme sur un fuselage d'aéronef, sans avoir à envoyer le radôme dans son site de fabrication.

Le support de radôme selon l'invention peut comprendre en outre les caractéristiques suivantes, considérées seules ou en combinaison :
- Tout ou partie des éléments de maintien articulés sont configurés pour présenter une surface d'appui sur le radôme, de forme complémentaire à la forme d'une portion d'un radôme d'aéronef, lequel radôme présente une forme prédéterminée.
- Le nombre d'éléments de maintien articulés est compris entre cinq et dix, préférentiellement huit.
- Chacun des pieds comprend une partie terminale d'attache audit élément annulaire, verrouillable en position.
- L'ouverture centrale de l'élément annulaire présente un diamètre supérieur à 60 cm, préférentiellement supérieur à 80 cm.
- Un ou plusieurs des pieds du support de radôme sont détachables.

L'invention a également pour objet un procédé de maintenance d'un radôme d'aéronef comprenant des étapes de positionnement d'un radôme d'aéronef sur un support tel que précédemment décrit, la partie arrière du radôme, comprenant des ferrures d'interface, étant en appui sur la surface plane de l'élément annulaire.

Avantageusement, le procédé de maintenance d'un radôme comprend en outre une opération de perçage ou de découpe à l'aide d'un gabarit compris dans l'un des éléments de maintien articulés ou positionné sur l'un de ces éléments de maintien.

Avantageusement encore, l'opération de perçage ou de découpe du procédé de maintenance précité comprend un positionnement d'un opérateur ou d'un équipement dans l'ouverture de l'élément annulaire et au moins l'un des éléments de maintien comprend un gabarit de perçage ou gabarit de découpe ou est configuré pour supporter un tel gabarit.

Selon un mode de réalisation, le procédé de maintenance comprend :
- ledit positionnement dudit radôme sur ledit support,
- une fixation dudit radôme sur ledit support grâce auxdites ferrures d'interfaces dudit radôme positionnées et calées en position grâce auxdits éléments de maintien articulés,
- une opération de perçage de la partie de peau réparée dudit radôme grâce à un gabarit de perçage intégré à l'un des éléments de maintien articulés positionné en regard de ladite partie de peau réparée,
- une fixation de ladite ferrure de remplacement grâce à des moyens de fixation et à un ou plusieurs perçages réalisés pendant ladite opération de perçage.

Selon un mode de réalisation, le procédé de maintenance comprend en outre, avant ladite étape de positionnement du radôme sur le support, une étape de retrait d'une ferrure endommagée du radôme d' aéronef et une étape de réparation d'une partie de peau dudit radôme dans une zone destinée à comprendre une ferrure de remplacement de ladite ferrure endommagée.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints :
[Fig. 1] illustre schématiquement un support de radôme d'aéronef configuré pour la maintenance d'un radôme, selon un mode de réalisation ; et,
[Fig. 2] illustre schématiquement le support de radôme d'aéronef déjà représenté sur la Fig. 1 lorsqu'un radôme d'aéronef est maintenu et positionné dessus en vue de réaliser une ou plusieurs opérations de maintenance.
[Fig. 3] illustre plus en détails le support de radôme déjà représenté sur la Fig. 1 et la Fig. 2.

### EXPOSÉ DÉTAILLÉ DE MODES DE RÉALISATION

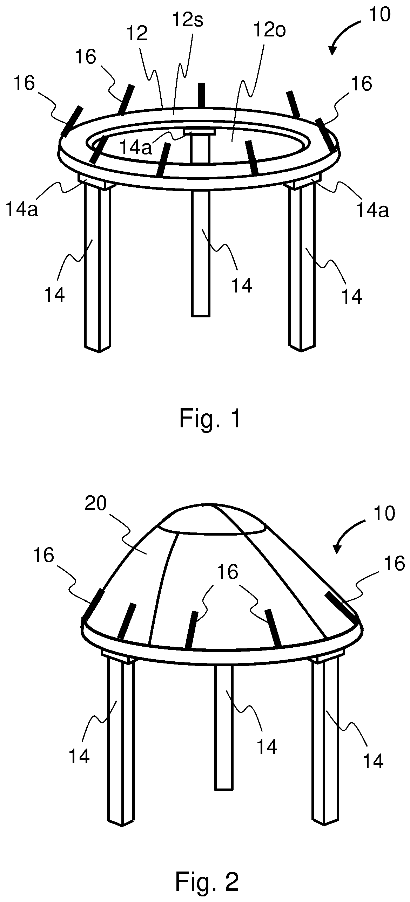

La **Fig. 1** est une représentation schématique d'un support 10 de radôme d'aéronef selon un mode de réalisation. Le support 10 de radôme d'aéronef comprend un élément annulaire 12. L'élément annulaire 12 présente une forme annulaire dans la mesure où il présente un contour extérieur circulaire ou ovale, ou encore sensiblement circulaire ou sensiblement ovale, ainsi qu'une ouverture centrale 12o. L'élément annulaire 12 présente en outre une surface plane 12s configurée pour recevoir l'arête arrière d'un radôme d'aéronef. Il est considéré ici qu'un radôme d'aéronef présente une forme générale de coque pointue, formant un dôme, destiné à être fixé à l'avant du fuselage d'un aéronef. L'avant du radôme d'aéronef est alors défini ici comme la pointe du radôme (ou le sommet du dôme), et donc comme la partie la plus éloignée des éléments de fuselage de l'aéronef auxquels le radôme est fixé. *A contrario,* l'arrière du radôme est défini comme la partie la plus proche des éléments de fuselage de l'aéronef auquel le radôme est fixé. Ainsi, l'arête arrière du radôme désigne ici l'arête décrivant un cercle ou un ovale et délimitant la surface intérieure et la surface d'un même radôme. Selon un mode de réalisation, la surface plane 12s de l'élément annulaire 12 n'est pas composée d'une surface plane unique mais est composée d'un ensemble de petites surfaces planes s'inscrivant dans un même plan. Par exemple, des surfaces planes offrant un appui à l'arrière du radôme sont agencées sur des éléments solidaires de l'élément annulaire 12, tels que des pattes de support, par exemple. L'élément annulaire est supporté par des pieds 14. Selon un mode de réalisation, les pieds 14 comprennent chacun une partie terminale d'attache 14a configurée pour pouvoir plier ou détacher le pied de l'élément annulaire 12 aux fins de faciliter le transport du support 10 de radôme. Selon une variante de réalisation, certains des pieds sont pliables et d'autres pieds sont détachables, grâce à des moyens mécaniques d'attache implémentés dans les parties terminales d'attaches 14a des pieds 14 du support 10 de radôme d'aéronef. Selon une autre variante de réalisation, tous les pieds 14 du support 10 de radôme sont détachables. Astucieusement, des éléments de maintien 16 articulés et amovibles sont agencés le long du bord extérieur de l'élément annulaire 12. Les éléments de maintien 16 sont configurés pour pouvoir être orientés chacun vers l'extérieur de l'élément annulaire 12 ou vers l'intérieur de l'élément annulaire 12, selon une direction radiale par rapport à l'élément annulaire 12. Selon un mode de réalisation, chacun des éléments de maintien 16 articulés présente une surface d'appui 16s de forme complémentaire à une forme locale d'un radôme d'aéronef d'une forme prédéterminée, c'est-à-dire un radôme d' aéronef pour le maintien duquel le support 10 de radôme d' aéronef est prévu et configuré. La forme complémentaire du radôme dont il est question ici est par exemple une forme d'une ferrure fixée en bordure du radôme. Une telle forme locale d'un radôme d'aéronef est par exemple une forme d'une ferrure d'interface complémentaire à une ferrure de type verrou articulé. L'ensemble des surfaces d'appui sur la surface du radôme permet un positionnement précis d'un radôme d'aéronef 20 pour le positionnement duquel le support 10 de radôme d'aéronef est configuré.

Selon un mode de réalisation, chacune des surfaces 16s présente une ouverture traversante, taraudée ou non et dans laquelle peut être insérée une vis configurée pour s'insérer en outre dans un taraudage d'une ferrure du radôme quand cette ferrure est positionnée et calée en appui contre une surface d'appui 16s.

Avantageusement, si un élément de fixation d'un support d'aéronef 20 doit être réparé ou remplacé, les éléments de maintien 16, opérant comme un gabarit de positionnement, permettent d'opérer un positionnement précis et ajusté du radôme d'aéronef 20 et de fournir le cas échéant, un gabarit 16t de perçage ou de découpe pour une opération de maintenance visant à réparer un support de radôme du radôme 20. Le fait que les éléments de maintien 16 soient articulés permet un dégagement de l'espace au-dessus du support 10 de radôme pour opérer un placement du radôme sur la (ou les) surface(s) 12s destinée(s) à accueillir le radôme pour lequel des opérations de maintenance sont requises, puis, de mettre chacun des éléments de maintien 16 en contact avec la surface du radôme, ce qui permet avantageusement d'opérer un positionnement précis. Astucieusement, le support 10 de radôme d'aéronef permet à la fois d'accéder aisément aux différentes zones (ou portions) du radôme 20, tout en opérant des fonctions de gabarit de positionnement pour offrir des repères précis, notamment pour le positionnement ajusté d'éléments mécaniques de fixation du radôme à un fuselage d'aéronef.

La **Fig. 2** illustre un positionnement précis du radôme d'aéronef 20 sur le support 10 de radôme d'aéronef configuré pour le recevoir dans une position adaptée à des opérations de maintenance. Par exemple, si un élément de fixation solidaire du radôme d'aéronef 20 doit être remplacé, il peut être retiré (démonté) du radôme d'aéronef 20, puis remonté sur le radôme d'aéronef 20 après que ce dernier eut été placé sur le support 10 de radôme d'aéronef, dans une position selon laquelle chacun des éléments de fixation restant sur le radôme d'aéronef 20 est positionné en regard de l'un des éléments de maintien articulés restant présents, avant la mise en place de l'élément de fixation de remplacement.

Avantageusement, le support de radôme 10 peut être utilisé pour tout procédé de maintenance d'un radôme d'aéronef après positionnement du radôme concerné en appui sur la ou les surface(s) plane(s) 12s de l'élément annulaire 12. Cela permet notamment de faciliter une opération de perçage ou de découpe, par exemple, à l'aide d'un gabarit compris dans l'un des éléments de maintien articulés 12 ou positionné sur l'un de ces éléments de maintien. Avantageusement, l'ouverture 12o de l'élément annulaire 12 présente un diamètre supérieur à 60 cm pour permettre une insertion d'un outil mécanique automatisé ou robotisé configuré pour intervenir à l'intérieur du radôme. Selon un mode de réalisation, l'ouverture 12o présente un diamètre supérieur à 80 cm, ce qui permet en outre à un opérateur d'avoir accès à l'intérieur du radôme pour des opérations de maintenance, de test ou de contrôle, par exemple.

Selon un mode de réalisation, les éléments de maintien 16 sont des ferrures articulées, encore appelées « verrous » configurées pour s'accrocher sur des ferrures d'interface de fixation du radôme, lesquelles sont alors agencées sur la surface intérieure du radôme. Selon cette configuration, les ferrures articulées (verrous), que sont les éléments de maintien 16, reproduisent au moins fonctionnellement, sinon intégralement, les caractéristiques des ferrures articulées (également nommées « verrous ») de fixation du radôme agencées sur le fuselage de l'aéronef auquel le radôme est associé (combiné). En outre, la surface d'appui du radôme sur laquelle prend appui un élément de maintien 16, prenant la forme d'une ferrure articulée, est une surface d'une ferrure intérieure du radôme configurée pour être crochetée avec une ferrure articulée (verrou) formant un élément de maintien 16. Selon cette configuration toujours, les ferrures articulées qui forment les éléments de maintien 16 présentent des formes complémentaires aux formes des ferrures d'interface de fixation du radôme, de sorte à permettre les fonctions de crochetage et de verrouillage utiles à la fixation du radôme sur la partie avant du fuselage de l'aéronef auquel il est combiné.

Selon un mode de réalisation préféré, huit verrous articulés et amovibles sont positionnés sur l'élément annulaire 12 du support de radôme 10, en reproduisant strictement le positionnement angulaire des verrous de fixation du radôme agencés à l'avant du fuselage de l'aéronef et destinés à la fixation du radôme sur l'aéronef. Ainsi, les verrous de l'outil support de radôme 10 peuvent se crocheter sur les ferrures d'un radôme positionné sur l'outil support de radôme 10 et offrir un positionnement de référence de nature à permettre de réparer ou de remplacer une ferrure et/ou un verrou défectueux, après une éventuelle réparation de la coque du radôme, si besoin. Avantageusement, le support de radôme 10 permet de précontraindre le radôme pour le mettre en forme comme sur l'aéronef auquel il est combiné. En effet, la coque du radôme, bien que globalement rigide, présente un certain degré de flexibilité. Ainsi lorsqu'une ferrure sera placée sur le radôme dans le cadre d'une réparation, elle le sera de manière correcte et précise.

La structure astucieuse du support de radôme 10 permet de le transporter aisément, et en conséquence de pouvoir réaliser des opérations de maintenance sur un radôme sans avoir à transporter ce dernier, ce qui permet avantageusement d'amoindrir le coût des opérations de maintenance des radômes d'aéronef.

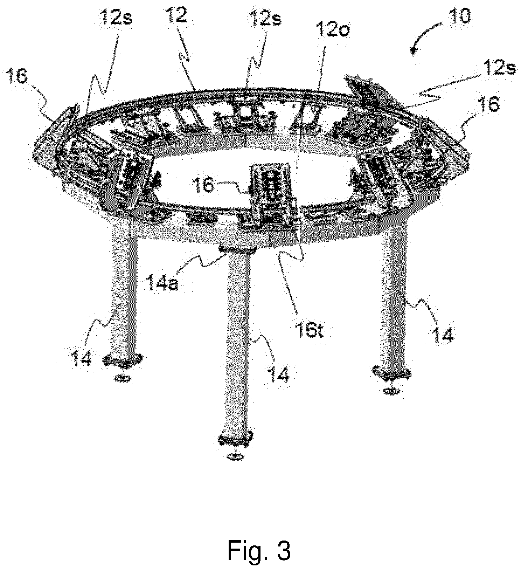

La **Fig. 3** illustre des détails du support de radôme 10 selon un mode de réalisation. Selon ce mode de réalisation, la surface plane 12s de l'élément annulaire 12 n'est pas composée d'une surface plane unique mais est composée d'un ensemble de petites surfaces planes 12s s'inscrivant dans un même plan. Ces surfaces planes 12s sont agencées chacune sur une partie d'un élément de maintien articulé 16, lui-même agencé sur l'élément annulaire 12, lequel élément de maintien est configuré pour opérer un guidage en position (ou un positionnement précis, en d'autres termes) d'un radôme d'aéronef sur le support de radôme en vue de réaliser une opération de maintenance du radôme.

De plus, chacune de ces surfaces planes 16s présente une ouverture traversante dans laquelle une vis peut être insérée pour positionner précisément et maintenir en position sur (contre) ladite surface plane 16s (c'est-à-dire fixer) une ferrure de radome d'aéronef. Selon un mode de réalisation, une telle vis est une vis crantée qui peut être serrée manuellement ou à l'aide d'un outil. Selon un mode de réalisation, une telle vis crantée peut être insérée à travers chacune des surfaces d'appui 16s, dans une direction de bas en haut, pour être vissée en outre dans une ferrure de radôme, de sorte que la tête de la vis soit en appui contre la face inférieure de l'élément présentant la surface d'appui 16s.

Avantageusement, une telle configuration permet d'utiliser les éléments de maintien articulés 16 pour maintenir le radôme dans une position précise prédéterminée, et en conséquence pour garantir une bonne mise en forme du radôme, lequel présente une certaine flexibilité du fait de sa structure.

Avantageusement, chacun des éléments de maintien articulés 16 comprend en outre un gabarit de perçage ou de découpe 16t qui permet alors d'opérer un perçage ou une découpe à l'endroit précis où cela est requis pour fixer une ferrure de remplacement sur une partie de peau de radôme qui a été réparée après avoir été endommagée.

Selon un mode de réalisation, le support de radôme 10 présente huit éléments de maintien articulés 16 dont le positionnement angulaire sur l'élément annulaire 12 est identique au positionnement angulaire des éléments de maintien présents sur un aéronef. Ainsi, lorsqu'une ferrure d'un radôme est endommagée et qu'il convient de la remplacer, sept parmi les huit éléments de maintien articulés 16 du support 10 sont utilisables pour positionner précisément, maintenir et mettre en forme le radôme sur le support 10, à l'aide de vis crantées dont sont dotées sept des surfaces d'appui 16s et permettre ainsi de conserver une bonne mise en forme du radôme en cours de réparation, qui autorisera en conséquence des opérations de perçage ou de découpe précises à l'aide d'un gabarit 16t compris dans le huitième élément de maintien 16 ou encore assemblé sur ce dernier.

En résumé, selon un mode de réalisation, chacun des éléments de maintien 16 comprend une surface d'appui 16s, pourvue d'une part d'un moyen de fixation à une ferrure d'un radôme, tel qu'une vis crantée, par exemple, et d'autre part d'un gabarit de perçage ou de découpe ou de moyens pour recevoir un tel gabarit de perçage ou de découpe.

## Revendications

1. Support (10) pour la maintenance d'un radôme (20) d'aéronef comprenant un élément annulaire (12) présentant une surface plane (12s) et à partir duquel s'étendent au moins trois pieds (14), le support comprenant une pluralité d'éléments de maintien articulés et amovibles (16) et comprenant chacun une surface d'appui sur une portion de surface d'un radôme (20) d'aéronef lorsque ledit radôme (20) est posé sur ladite surface plane (12s) dudit élément annulaire (12), le support étant **caractérisé en ce que** l'un au moins des éléments de maintien articulés et amovibles (16) comprend un gabarit de perçage (16t) ou gabarit de découpe (16t) ou est configuré pour supporter un tel gabarit (16t).

2. Support (10) selon la revendication 1, dans lequel tout ou partie des éléments de maintien articulés (16) sont configurés pour présenter une surface d'appui sur ledit radôme, de forme complémentaire à la forme d'une portion d'un radôme d'aéronef lequel radôme présente une forme prédéterminée.

3. Support (10) selon l'une des revendications 1 et 2, dans lequel le nombre d'éléments de maintien articulés est compris entre cinq et dix, préférentiellement huit.

4. Support (10) selon l'une des revendications précédentes, dans lequel chacun des pieds (14) comprend une partie terminale d'attache (14a) audit élément annulaire (12), verrouillable en position.

5. Support (10) selon l'une des revendications précédentes, dans lequel l'ouverture centrale (12o) de l'élément annulaire présente un diamètre supérieur à 60 cm, préférentiellement supérieur à 80 cm.

6. Support (10) selon l'une des revendications précédentes, dans lequel un ou plusieurs desdits pieds (14) sont détachables.

7. Support (10) selon l'une des revendications précédentes, dans lequel les éléments de maintien (16) sont des ferrures articulées agencées pour opérer des fonctions de verrou en combinaison avec des ferrures d'interfaces d'un radôme.

8. Support (10) selon la revendication précédente, dans lequel les éléments de maintien (16) implémentés sous forme de ferrures articulées sont respectivement agencés pour opérer chacun une fonction de verrou en combinaison avec une ferrure d'interface agencée sur la surface intérieure dudit radôme.

9. Procédé de maintenance d'un radôme d'aéronef comprenant des étapes de positionnement d'un radôme d'aéronef sur un support (10) selon l'une des revendications 3 à 8, la partie arrière du radôme, comprenant des ferrures d'interface, étant en appui sur ladite surface plane (12s) dudit élément annulaire (12).

10. Procédé de maintenance d'un radôme d'aéronef selon la revendication 9, le procédé de maintenance comprenant :
- ledit positionnement dudit radôme sur ledit support (10),
- une fixation dudit radôme sur ledit support (10) grâce auxdites ferrures d'interfaces dudit radôme positionnées et calées en position grâce auxdits éléments de maintien articulés (16),
- une opération de perçage de la partie de peau réparée dudit radôme grâce à un gabarit de perçage (16t) intégré à l'un des éléments de maintien articulés (16) positionnés en regard de ladite partie de peau réparée,
- une fixation de ladite ferrure de remplacement grâce à des moyens de fixation et à un ou plusieurs perçages réalisés pendant ladite opération de perçage.

11. Procédé de maintenance d'un radôme d'aéronef selon la revendication 10, le procédé de maintenance comprenant en outre, avant ladite étape de positionnement du radôme, une étape de retrait d'une ferrure endommagée du radôme d'aéronef et une étape de réparation d'une partie de peau dudit radôme dans une zone destinée à comprendre une ferrure de remplacement de ladite ferrure endommagée.

## Patentansprüche

1. Halterung (10) zur Wartung eines Radoms (20) eines Luftfahrzeugs, umfassend ein ringförmiges Element (12), das eine ebene Oberfläche (12s) aufweist und von dem aus sich mindestens drei Füße (14) erstrecken, wobei die Halterung eine Mehrzahl von Halteelementen (16) umfasst, die angelenkt und entfernbar sind und jeweils eine Auflagefläche auf einem Oberflächenabschnitt eines Radoms (20) eines Luftfahrzeugs umfassen, wenn das Radom (20) auf die ebene Oberfläche (12s) des ringförmigen Elements (12) gesetzt wird, wobei die Halterung **dadurch gekennzeichnet ist, dass** mindestens eines der angelenkten und entfernbaren Halteelemente (16) eine Bohrschablone (16t) oder eine Schneidschablone (16t) umfasst oder dazu ausgestaltet ist, eine solche Schablone (16t) zu haltern.

2. Halterung (10) nach Anspruch 1, wobei alle oder ein Teil der angelenkten Halteelemente (16) dazu ausgestaltet sind, eine Auflagefläche auf dem Radom aufzuweisen, deren Form komplementär zu der Form eines Abschnitts eines Luftfahrzeugradoms ist, wobei das Radom eine vorbestimmte Form aufweist.

3. Halterung (10) nach einem der Ansprüche 1 und 2, wobei die Anzahl von angelenkten Halteelementen zwischen fünf und zehn, vorzugsweise acht beträgt.

4. Halterung (10) nach einem der vorhergehenden Ansprüche, wobei jeder der Füße (14) einen Befestigungsendteil (14a) zur Befestigung an dem ringförmigen Element (12) umfasst, der in Position verriegelbar ist.

5. Halterung (10) nach einem der vorhergehenden Ansprüche, wobei die zentrale Öffnung (12o) des ringförmigen Elements einen Durchmesser von mehr als 60 cm, vorzugsweise mehr als 80 cm, aufweist.

6. Halterung (10) nach einem der vorhergehenden Ansprüche, wobei einer oder mehrere der Füße (14) abnehmbar sind.

7. Halterung (10) nach einem der vorhergehenden Ansprüche, wobei die Halteelemente (16) angelenkte Beschläge sind, die dazu ausgebildet sind, Riegelfunktionen in Kombination mit Schnittstellenbeschlägen eines Radoms auszuführen.

8. Halterung (10) nach dem vorhergehenden Anspruch, wobei die in Form von angelenkten Beschlägen implementierten Halteelemente (16) jeweils dazu ausgebildet sind, jeweils eine Riegelfunktion in Kombination mit einem auf der Innenoberfläche des Radoms ausgebildeten Schnittstellenbeschlag auszuführen.

9. Verfahren zur Wartung eines Luftfahrzeugradoms, umfassend Schritte zum Positionieren eines Luftfahrzeugradoms auf einer Halterung (10) nach einem der Ansprüche 3 bis 8, wobei der hintere Teil des Radoms, der Schnittstellenbeschläge umfasst, auf der ebenen Oberfläche (12s) des ringförmigen Elements (12) aufliegt.

10. Verfahren zur Wartung eines Luftfahrzeugradoms nach Anspruch 9, das Verfahren zur Wartung umfassend:
- das Positionieren des Radoms auf der Halterung (10),
- ein Befestigen des Radoms auf der Halterung (10) dank der Schnittstellenbeschläge des Radoms, die dank der angelenkten Halteelemente positioniert und in der Position festgelegt werden (16),
- einen Vorgang des Bohrens des reparierten Hautteils des Radoms dank einer Bohrschablone (16t), die in eines der angelenkten Halteelemente (16) integriert ist, die gegenüber dem reparierten Hautteil positioniert sind,
- ein Befestigen des Ersatzbeschlags dank von Befestigungsmitteln und einer oder mehreren Bohrungen, die während des Vorgangs zum Bohren ausgeführt wurden.

11. Verfahren zur Wartung eines Luftfahrzeugradoms nach Anspruch 10, wobei das Verfahren zur Wartung ferner vor dem Schritt des Positionierens des Radoms einen Schritt des Entfernen eines beschädigten Beschlags des Luftfahrzeugradoms und einen Schritt des Reparierens eines Hautteils des Radoms in einem Bereich umfasst, der dazu bestimmt ist, einen Ersatzbeschlag für den beschädigten Beschlag zu umfassen.

## Claims

1. Support (10) for the maintenance of an aircraft radome (20), comprising an annular element (12) that has a flat surface (12s) and from which at least three feet (14) extend, the support comprising a plurality of articulated and removable holding elements (16) each comprising a surface for bearing on a surface portion of an aircraft radome (20) when said radome (20) is placed on said flat surface (12s) of said annular element (12), the support being **characterized in that** at least one of the articulated and removable holding elements (16) comprises a drilling template (16t) or cutting template (16t) or is configured to support such a template (16t).

2. Support (10) according to Claim 1, wherein all or part of the articulated holding elements (16) are configured to have a surface for bearing on said radome, of shape complementary to the shape of a portion of an aircraft radome, which radome has a predetermined shape.

3. Support (10) according to either of Claims 1 and 2, wherein the number of articulated holding elements is between five and ten, preferentially eight.

4. Support (10) according to one of the preceding claims, wherein each of the feet (14) comprises a terminal part (14a) for attachment to said annular element (12), which can be locked in position.

5. Support (10) according to one of the preceding claims, wherein the central opening (12o) of the annular element has a diameter greater than 60 cm, preferentially greater than 80 cm.

6. Support (10) according to one of the preceding claims, wherein one or more of said feet (14) are detachable.

7. Support (10) according to one of the preceding claims, wherein the holding elements (16) are articulated fittings arranged to perform lock functions in combination with interface fittings of a radome.

8. Support (10) according to the preceding claim, wherein the holding elements (16) implemented in the form of articulated fittings are respectively arranged to each perform a lock function in combination with an interface fitting arranged on the inner surface of said radome.

9. Method for maintenance of an aircraft radome, comprising steps of positioning of an aircraft radome on a support (10) according to one of Claims 3 to 8, the rear part of the radome, comprising interface fittings, bearing on said flat surface (12s) of said annular element (12).

10. Method for maintenance of an aircraft radome according to Claim 9, the maintenance method comprising:
- said positioning of said radome on said support (10),
- fastening of said radome to said support (10) by virtue of said interface fittings of said radome, which are positioned and wedged in position by virtue of said articulated holding elements (16),
- an operation of drilling the repaired skin part of said radome by virtue of a drilling template (16t) integrated in one of the articulated holding elements (16) positioned facing said repaired skin part,
- fastening of said replacement fitting by virtue of fastening means and one or more drilled holes created during said drilling operation.

11. Method for maintenance of an aircraft radome according to Claim 10, the maintenance method further comprising, before said step of positioning of the radome, a step of removal of a damaged fitting from the aircraft radome and a step of repair of a skin part of said radome in a zone intended to comprise a replacement fitting for said damaged fitting.
